# EUROPEAN PATENT SPECIFICATION

(11) **EP 0 838 502 B1**
(45) Date of publication and mention of the grant of the patent: **13.09.2000**
(21) Application number: 97203263.5
(22) Date of filing: 20.10.1997
(51) Int. Cl.: C08L 67/06, C08G 63/553, C08G 63/676, F21V 7/22

(54) **Unsaturated polyester resin composition for directly metallizable headlamp reflectors**
Ungesättigte Polyesterharzmischung für direkt metallisierbare Scheinwerferreflektoren
Composition de résine polyester insaturé pour des réflecteurs de phares métallisables directement

(30) Priority: 24.10.1996 DE 19644207
(43) Date of publication of application: 29.04.1998
(73) Proprietor: DSM RESINS B.V., 8022 AW Zwolle (NL)
(72) Inventor: Zwecker, Joachim, 69469 Weinheim (DE); Buhl, Dieter, 67227 Frankenthal (DE); Hilzendegen, Peter, 76829 Landau (DE); Damian, Jürgen, 67127 Rödersheim-Gronau (DE)
(74) Representative: Dorrestijn, Antoon

(56) References cited:
- EP-A- 0 681 000
- US-A- 4 048 257
- US-A- 4 626 570

## Description

The invention relates to a method of using a molding composition based on unsaturated polyester resins for producing directly metallizable headlamp reflectors.

Motor vehicle headlamps contain rotation-paraboloid reflectors which deliver a concentrated directed cone of light. These reflectors are mostly injection-molded from curable doughy polyester resins (BMC compositions). moldings produced from BMC compositions have high heat resistance, good mechanical properties, chemical resistance and, if they contain thermoplastic low-shrinkage components (LP additives), shrinkage of whatever low level is required. The inner side of the reflectors is metallized with an aluminum layer of about from 1 to 5 µm thickness, which reflects the light.

It has now been found that the surface of the reflector has a certain roughness and unevenness. So that a satisfactory adhesion of the aluminum layer is ensured and a perfectly level and smooth reflection layer is produced when metallizing, the inner surfaces of the headlamp reflectors are currently covered with a coating before being metallized. For this, four complex operations are required: UV pretreatment of the surface, coating, air-drying and curing. These matters are summarized in the lecture "BMC-Fertigung von Scheinwerferreflektoren" by W. Haack at the GFK International Automotive Construction Conference, October 1988, published in the conference handbook.

This gave rise to the task of improving the surface quality of headlamp reflectors made from BMC molding compositions so that direct metallization without previous coating becomes possible.

EP-A 681 000 describes BMC molding compositions which are based on unsaturated polyester resins and from which such directly metallizable headlamp reflectors can be produced. These molding compositions, however, must by necessity contain a crystalline unsaturated polyester, and such crystalline polyesters are expensive and difficult to handle and to incorporate into the polyester resin. It is an object of the present invention, therefore, to develop BMC molding compositions for directly metallizable headlamp reflectors, in which the unsaturated polyester resin does not need to contain any crystalline unsaturated polyesters.

We have found that this object is achieved by employing an unsaturated polyester based on maleic acid, propylene glycol and dicyclopentadiene (DCPD).

The invention therefore relates to the use of curable doughy molding compositions (BMC) comprising unsaturated polyester resins, low-shrinkage polymer components, glass fibers, fillers and initiators for producing directly metallizable headlamp reflectors, where the unsaturated polyester resin comprises an unsaturated polyester of the following overall formulation:

From 0.75 to 1 mol of propylene glycol units and from 0.05 to 0.2 mol of dicyclopentadiene units are combined with 1 mol of maleic acid and/or fumaric acid units, where up to 30 mol% of the maleic acid and/or fumaric acid units may be replaced by units of other dicarboxylic acids, and up to 30 mol% of the propylene glycol units may be replaced by units of other diols, and where at least 75% of the dicyclopentadiene units are terminal.

Preferred BMC molding compositions have the following formulation
- A.: from 8 to 40% by weight of the unsaturated polyester resin in the form of a styrene solution,
- B.: from 5 to 15% by weight of a low-shrinkage polymer component,
- C.: from 5 to 20% by weight of reinforcing fibers,
- D.: from 30 to 70% by weight of fillers,
- E.: from 0.1 to 1% by weight of polymerization initiators, and
- F.: further additives if desired, where the percentage figures sum to 100.

The individual components of a molding composition are described in the following:
- A:: Unsaturated polyester resins are from 50 to 80% strength by weight solutions of amorphic unsaturated polyesters in from 20 to 50% by weight of monomers, preferably in styrene. The unsaturated polyesters are condensation products of dibasic carboxylic acids and their esterifiable derivatives, in particular their anhydrides, which are esterified with dihydric alcohols. The unsaturated polyesters are prepared by polycondensation of maleic anhydride, propylene glycol and DCPD. During this, the double bonds of the maleic acid isomerize to a large extent from the cis-into the trans-structure, so that the unsaturated polyester contains primarily fumaric acid units. The unsaturated polyesters preferably have an acid number of from 10 to 40 (measured by titration with 0.1 N methanolic KOH of a toluene/ethanol solution of the unsaturated polyester) and a mean molar mass (number average) of from 500 to 3000 g/mol, preferably from 1000 to 2500 g/mol, and in particular from 1500 to 2000 g/mol. The OH number should preferably be from 0 to 20.
There are a number of ways of preparing the unsaturated DCPD-polyester:
In a first preferred embodiment, a precondensate of maleic anhydride and the diol is firstly prepared, for which it is expedient to use only a part of the total amount of diol required, preferably from 40 to 80% by weight. The DCPD is then added at below 160'C, preferably at from 130 to 155OC, and finally the remaining diol.
In a second preferred embodiment, maleic anhydride is firstly hydrolyzed with water and the resultaat maleic acid is partially reacted with DCPD to give the corresponding half-ester. In a second step, the mixture of half-ester and maleic acid is then polycondensed with the diol to give the polyester with DCPD end groups.
In both cases, extensive rearrangement from the maleic acid structure to the fumaric acid structure takes place.
In preparing the unsaturated polyester, care must be taken to select a ratio of amounts of starting materials which gives the following formulation. From 0.75 to 1 mol, preferably from 0.8 to 0.9 mol, of propylene glycol units and from 0.5 to 0.2 mol, preferably from 0.2 to 0.4 mol, of DCPD units are combined with 1 mol of maleic acid and/or fumaric acid units, where up to 30 mol%, preferably from 5 to 15 mol%, of the acid units may be replaced by units of other dicarboxylic acids, preferably phthalic acid, and up to 30 mol%, preferably from 10 to 30 mol%, of the propylene glycol units may be replaced by units of other diols, preferably dipropylene glycol. Finally, at least 75%, preferably at least 80%, and in particular at least 90%, of the DCPD units should be terminal, the remainder being incorporated into the polyester chain in the form of endomethylenetetrahydrophthalic acid groups.
The unsaturated polyester is dissolved in styrene, styrene being preferably employed here as the sole comonomer, but up to 40% by weight of the styrene may be replaced by other conventional comonomers, e.g. vinyltoluene, a-methylstyrene, allyl compounds or (meth)acrylates.
- B.: The thermoplastic polymeric compound B has the effect of reducing shrinkage during the curing of the BMC and thus improves the surface quality of the molding. Suitable thermoplastic polymers are, for example, polystyrene, impact-modified polystyrene, polyethylene, polyvinyl acetate, ethylene-vinyl acetate copolymer and corresponding copolymers and graft copolymers. Preference is given to saturated polyesters and polymethyl methacrylate.
The thermoplastic polymers may also contain carboxyl groups. They are present in the molding compositions in amounts of from 5 to 15% by weight, preferably from 7 to 10% by weight.
- C.: Suitable reinforcing fibers are inorganic and organic fibers in the form of rovings or chopped fibers, e.g. of glass, carbon or cellulose, and synthetic organic fibers, such as polyethylene, polyesters of carboxylic acids, polycarbonates and polyamides. They are present in the molding compositions in amounts of from 5 to 20% by weight, preferably from 7 to 12% by weight. Glass fibers are preferred.
- D.: Suitable fillers are, for example, conventional fine-powder or particulate inorganic fillers, such as chalk, kaolin, quartz powder, dolomite, baryte, alumina hydrate, talc, pigments, kieselguhr and the like. They are present in the molding compositions preferably in amounts of from 30 to 70% by weight, preferably from 40 to 50% by weight.
- E.: The polymerization initiators employed are the conventional organic peroxides which form free-radicals when heated. Examples of suitable initiators are dibenzoyl peroxide, tert-butyl peroctoate, tert-butyl perbenzoate, dicumyl peroxide, di-tert-butyl peroxide, and perketals, such as trimethylcyclohexanone perketal, and percarbonates. CC-labile compounds and azo compounds are also suitable. The initiators are present in the molding compositions in amounts of from 0.1 to 1% by weight, preferably from 0.4 to 0.7% by "eight.
- F.: Suitable further conventional additives are:
- Lubricants, such as zinc stearate, magnesium stearate and calcium stearate, and polyalkylene ether waxes, preferably in amounts of from 0.1 to 2% by weight.
- Inhibitors, such as hydroquinone, substituten hydroquinones, pyrocatechol, tert-butylpyrocatechol, ring-substituted pyrocatechols, quinones, such as benzoquinone and naphthoquinone, chloranil, nitrobenzenes, such as m-dinitrobenzene, thiodiphenylamine, N-nitroso compounds, such as N-nitrosodiphenylamine and salts of N-nitrosocyclohexylhydroxylamine and a mixture of these. Suitable additional stabilizers are salts of divalent copper, for example copper naphthenate or octoate, and quaternary ammonium salts. The inhibitors are preferably present in the molding compositions in amounts of from 0.005 to 0.1% by weight.
- Thickeners, such as oxides or hydroxides of lithium, of magnesium or of calcium, of aluminum or of titanium. magnesium oxide is preferred. The thickeners are preferably present in the molding composition in amounts of from 0.1 to 0.5% **by** weight.

The molding compositions are prepared by mixing the components, preferably in conventional compounders or mixing roll assemblies, at room temperaturen The headlamp reflectors are produced from the BMC molding compositions in conventional injection-molding machines for thermosetting materials, the molding compositions being injected into a heated mold and cured there at from 150 to 200°C.

Surprisingly, it has been found that headlamp reflectors produced using BMC molding compositions containing the specific unsaturated polyester resins can be metallized using aluminum vapor without prior coating to give a perfectly level and flat reflecting layer which has excellent adhesion to the substrate.

### Examples

Parts and percentages are by weight.

### 1. Preparation of the unsaturated polyester resin

An unsaturated polyester was prepared from maleic anhydride, phthalic anhydride, propylene glycol, dipropylene glycol and DCPD in a molar ratio of 2:0.2:1.5:0.5:0.2, by melt condensation at 200'C under nitrogen, and was dissolved in styrene to give a 65% strength solution. The unsaturated polyester had an acid number of 17. The styrene solution was stabilized with 150 ppm of hydroquinone.

### 2. Preparation of the BMC molding compositions Formulation

70 parts of UP resin as in 1.
30 parts of saturated polyester made from adipic acid, ethylene glycol and propylene glycol (molar ratio 1:0.6:0.4), as styrene solution.
4.5 parts of zinc stearate
1.5 parts of tert-butyl perbenzoate
150 parts of chalk (Millicarb)
60 parts of chopped glass fibers of length from 3 to 4 mm

To prepare the compositions, the liquid components are mixed and homogenized into a paste with about 50% of the filler. The remainder of the filler and the glass fibers are added in a componeer

### 3. Conversion of the BMC composition and metallization

The mold for producing the headlamp reflecto, is heated to a mold surface temperature of from 150 to 160°C. The BMC composition is injected into the mold over the course of from 1 to 5 sec, and cured there for from 40 to 80 sec.

After demolding, the reflector is cleaned and transferred to a UV treatment. It is metallized under reduced pressure with aluminum to a thickness of from 80 to 100 nm, giving a satisfactorily smooth surface, no coating having been necessary before the treatment.

## Claims

1. Use of a curable, doughy molding composition (BMC) comprising unsaturated polyester resins, lowshrinkage polymer components, glass fibers, fillers and initiators, for producing directly metallizable headlamp reflectors, wherein the unsaturated polyester resin comprises an unsaturated polyester of the following overall formulation: From 0.75 to 1 mol of propylene glycol units and from 0.05 to 0.2 mol of dicyclopentadiene units are combined with 1 mol of maleic acid and/or fumaric acid units, where up to 30 mol% of the maleic acid and/or fumaric acid units may be replaced by units of other dicarboxylic acids, and up to 30 mol% of the propylene glycol units may be replaced by units of other diols, and where at least 75% of the dicyclopentadiene units are terminal.

2. Use of a molding composition as claimed in claim 1, wherein the molding composition has the following formulation:
A. from 8 to 40% **by** weight of the unsaturated polyester resin in the form of a styrene solution,
B. from 5 to 15% **by** weight of a low-shrinkage polymer component,
C. from 5 to 20% by weight of reinforcing fibers,
D. from 30 to 70% by weight of fillers,
E. from 0.1 to 1% by weight of polymerization initiators,
and
F. further additives if **desired**, where the percentage figures sum to 100.

3. Use of a molding composition as claimed in claim 1, wherein from 5 to 15 mol% of the fumaric acid and/or maleic acid units are replaced by phthalic acid units.

4. Use of a molding composition as claimed in claim 1, wherein from 10 to 30 mol% of the propylene glycol units are replaced by dipropylene glycol units.

5. Use of a molding composition as claimed in claim 1, wherein the low-shrinkage polymer component C is polymethyl methacrylate or a saturated polyester.

## Patentansprüche

1. Verwendung von härtbaren, teigigen Formmassen (BMC), enthaltend ungesättigte Polyesterharze, Niederschrumpf-Polymerkomponenten, Glasfasern, Füllstoffe und Initiatoren, zur Herstellung von direkt metallisierbaren Scheinwerferreflektoren, wobei das ungesättigte Polyesterharz einen ungesättigten Polyester folgender Bruttozusammensetzung enthält:
Auf 1 Mol Maleinsäure- und/oder Fumarsäure-Einheiten kommen 0,75 bis 1 Mol Propylenglykol-Einheiten und 0,05 bis 0,2 Mol Dicyclopentadien-Einheiten, wobei bis zu 30 Mol-% der Maleinsäure- und/oder Fumarsäure-Einheiten durch Einheiten anderer Dicarbonsäuren und bis zu 30 Mol-% der Propylenglykol-Einheiten durch Einheiten anderer Diole ersetzt sein können, und wobei mindestens 75 % der Dicyclopentadien-Einheiten endständig sind.

2. Verwendung von Formmassen nach Anspruch 1, wobei diese folgende Zusammensetzung haben:
A. 8 bis 40 Gew.-% des ungesättigten Polyesterharzes in Form einer styrolischen Lösung,
B. 5 bis 15 Gew.-% einer Niederschrumpf-Polymerkomponente,
C. 5 bis 20 Gew.-% Verstärkungsfasern,
D. 30 bis 70 Gew.-% Füllstoffe,
E. 0,1 bis 1 Gew.-% Polymerisationsinitiatoren, und
F. gegebenenfalls weitere Zusatzstoffe, wobei sich die Prozentzahlen auf 100 addieren.

3. Verwendung von Formmassen nach Anspruch 1, wobei 5 bis 15 Mol-% der Fumarsäure- und/oder Maleinsäure-Einheiten durch Phthalsäure-Einheiten ersetzt sind.

4. Verwendung von Formmassen nach Anspruch 1, wobei 10 bis 30 Mol-% der Propylenglykol-Einheiten durch Dipropylenglykol-Einheiten ersetzt sind.

5. Verwendung von Formmassen nach Anspruch 1, wobei die Niederschrumpf-Polymerkomponente C Polymethyl-methacrylat oder ein gesättigter Polyester ist.

## Revendications

1. Utilisation d'une composition de moulage (BMC), pâteuse et durcissable, comportant des résines polyester insaturé, des composants polymères de faible rétrécissement, des fibres de verre, des matières de charge et des initiateurs, pour fabriquer des réflecteurs de phares, directement métallisables, la résine polymère insaturé comprenant un polyester insaturé de la formulation globale suivante :
de 0,75 à 1 mole de motifs propylène glycol et de 0,05 à 0,2 mole de motifs dicyclopentadiène sont combinés avec 1 mole de motifs acide maléique et/ou acide fumarique, où jusqu'à 30 % molaire des motifs acide maléique et/ou acide fumarique peuvent être remplacés par des motifs d'autres acides dicarboxyliques, et jusqu'à 30 % molaire des motifs propylène glycol peuvent être remplacés par des motifs d'autres diols, et où au moins 75 % de motifs dicyclopentadiène sont terminaux.

2. Utilisation d'une composition de moulage telle que revendiquée dans la revendication 1, dans laquelle la composition de moulage a la formulation suivante :
A. de 8 à 40 % en poids de résine polyester insaturé sous la forme d'une solution de styrène,
B. de 5 à 15 % en poids d'un composant polymère à faible rétrécissement,
C. de 5 à 20 % en poids de fibres de renforcement,
D. de 30 à 70 % en poids des matières de charge,
E. de 0,1 à 1 % en poids d'initiateurs de polymérisation, et
F. d'autres additifs, si on le souhaite, où les chiffres de pourcentage totalisent jusqu'à 100.

3. L'utilisation d'une composition de moulage telle que revendiquée dans la revendication 1, dans laquelle de 5 à 15 % molaire de motifs acide fumarique et/ou acide maléique sont remplacés par des motifs acide phtalique.

4. Utilisation d'une composition de moulage telle que revendiquée dans la revendication 1, dans laquelle de 10 à 30 % molaire de motifs propylène glycol sont remplacés par des motifs dipropylène glycol.

5. Utilisation d'une composition de moulage telle que revendiquée dans la revendication 1, dans laquelle le composant polymère de faible rétrécissement C est un polyméthacrylate de méthyle ou un polyester saturé.
